# EUROPEAN PATENT SPECIFICATION

(11) **EP 3 517 418 B1**
(45) Date of publication and mention of the grant of the patent: **24.03.2021**
(21) Application number: 19153445.2
(22) Date of filing: 24.01.2019
(51) Int. Cl.: B62J 17/06, B60L 1/00

(54) **STRADDLED VEHICLE**
GRÄTSCHSITZFAHRZEUG
VÉHICULE À ENFOURCHER

(30) Priority: 25.01.2018 JP 2018010875; 15.05.2018 JP 2018093734
(43) Date of publication of application: 31.07.2019
(73) Proprietor: YAMAHA HATSUDOKI KABUSHIKI KAISHA, Iwata-shi, Shizuoka 438-8501 (JP)
(72) Inventor: PHANSUA, Jaruwat, 10540 Samutprakarn (TH); CHAIYASIT, Worakrit, 10540 Samutprakarn (TH)
(74) Representative: Grünecker Patent- und Rechtsanwälte PartG mbB

(56) References cited:
- EP-A1- 2 979 963
- JP-A- 2013 071 566
- US-A1- 2001 047 896

## Description

The present invention relates to a straddled vehicle.

Straddled vehicles include a power supply portion near a storage pocket of a leg shield. For example, in WO2014/192587, an accessory socket capable of charging a mobile information terminal is disposed in a storage portion of a leg shield. The opening of the storage portion faces the horizontal direction, and is opened and closed by a lid. It is possible to charge the mobile information terminal stored in the storage portion while the opening is closed by the lid.

In Taiwan Patent Application Publication No. TW201627184, a USB port capable of charging a mobile information terminal is disposed upward from an opening in a storage portion. The storage portion is not provided with a lid, and the opening of the storage portion faces upward. Additionally, the USB port is disposed facing downward.

If the storage pocket does not have a lid, even long articles such as beverage bottles can be stored in the storage pocket with a portion of the long article protruding from the opening of the storage pocket. However, when the storage portion includes a lid as in WO2014/192587, the lid interferes with the article and, consequentially, it is difficult to store articles in the storage portion. As a result, the volume of the storage portion must be increased to store long articles. In this case, the structures around the head pipe such as the front cover and the leg shield will become larger.

In WO2014/192587, the opening of the storage portion faces the horizontal direction. Consequently, in the vehicle of WO2014/192587, if the lid is omitted from the storage portion, the articles will fall out of the storage portion.

Meanwhile, in the vehicle of TW201627184, the storage portion does not include a lid and, as such, even long articles can be stored in the storage portion in a state protruding from the opening. Moreover, since the opening of the storage portion faces upward, the articles can be prevented from falling out of the storage portion.

However, in TW201627184, the USB port is disposed facing downward. Accordingly, when articles are stored in the storage portion, the articles interfere with a cable that connects to the USB port, thereby making it difficult to use the power supply portion. As a result, when, for example, articles are stored in the storage portion, it is difficult to use the power supply portion to charge a mobile information terminal.

Further prior art is known from documents JP2013071566A, US2001/047896A1 and EP2979963A1.

In particular document JP2013071566A discloses the features of the preamble part of claim 1.

An object of the present invention is to provide straddled vehicle that allows to make the structures around the head pipe of a straddled vehicle compact, enable the storage of long articles in a storage pocket, and make it possible to use a power supply portion, even when other articles are stored in the storage pocket.

According to the present invention said object is solved by a straddled vehicle having the features of independent claim 1. Preferred embodiments are laid down in the dependent claims.

A straddled vehicle according to one aspect includes a head pipe, a steering shaft, a handle portion, a front cover, a leg shield, a storage pocket, and a power supply portion. The head pipe is disposed at a vehicle center in a vehicle width direction. The steering shaft is disposed through the head pipe. The handle portion is connected to the steering shaft, and configured to rotate by an operation of a rider. The front cover is disposed in front of the head pipe. The leg shield is disposed behind the front cover. A storage pocket provided is in the leg shield, leftward or rightward of a center line that passes through the vehicle center in the vehicle width direction. The storage pocket does not have a lid. A power supply portion is disposed in the leg shield, on a same side in a left-right direction as the storage pocket with respect to the center line.

The storage pocket includes a storage opening that opens upward. The storage opening is for putting in and taking out articles. A handle portion is disposed upward from the storage opening and a power supply portion. The power supply portion is disposed within the storage pocket. The power supply portion includes a power supply opening where a charging device is attachable and detachable. In a vehicle side view, the storage pocket overlaps with the power supply portion. In a vehicle front-back direction, an axis of the power supply portion, which extends from a bottom portion of the power supply portion toward the power supply opening, extends rearward and upward.

With the straddled vehicle according to the present aspect, the storage opening does not have a lid and opens upward. As a result, the structures around the head pipe are made compact, and long articles can be stored in the storage pocket. Moreover, since the axis of the power supply portion extends upward, the power supply portion can be used even when other articles are stored in the storage pocket.

The angle of the axis of the power supply portion with respect to the horizontal direction may be 45 degrees or greater. This configuration further facilitates use of the power supply portion.

The angle of the opening direction of the storage opening with respect to the horizontal direction may be 45 degrees or greater. This configuration makes it less likely for a long article to fall out of the storage pocket and also makes it possible for the long article to be stably stored, even when a portion of the long article protrudes from the storage opening.

The power supply opening may be disposed in the storage pocket. The configuration makes it possible to prevent the entry of rain and the like into the power supply portion. Additionally, this configuration enables an article such as a mobile information terminal to be charged while stored in the storage pocket.

The left leg shield may include an inclined portion that extends rearward and upward from the storage opening. In a vehicle plan view, the inclined portion may overlap with at least a portion of the storage opening. The configuration makes it possible to prevent the entry of rain and the like into the power supply portion.

The handle portion may include a handlebar and a handle cover. The handlebar may be connected to the steering shaft. The handle cover may cover the handlebar. The handle cover may be disposed upward from the storage opening. This configuration makes it possible to prevent the entry of rain and the like into the power supply portion by the handle cover.

The storage pocket includes a first storage portion and a second storage portion. The first storage portion may include a first bottom portion. The second storage portion may include a second bottom portion that is disposed at a different height than the first bottom portion. This configuration makes it possible to divide and store a plurality of articles in each of the first storage portion and the second storage portion of the storage pocket.

The storage pocket may further include a first step portion provided between the first bottom portion and the second bottom portion. This configuration makes it possible to reduce movement of the articles in the storage pocket by the first step portion.

The power supply opening may be positioned upward from a bottom portion of the first storage portion. This configuration facilitates the attaching and detaching of a charging device.

The power supply opening is positioned upward from a bottom portion of the second storage portion. This configuration facilitates the attaching and detaching of a charging device.

The storage pocket may include a third bottom portion positioned upward from the first bottom portion and the second bottom portion. The power supply opening is disposed in the third bottom portion. This configuration facilitates the attaching and detaching of a charging device.

The storage pocket may include a second step portion and a third step portion. The second step portion may be provided between the first bottom portion and the third bottom portion. The third step portion may be provided between the second bottom portion and the third bottom portion. This configuration makes it possible to reduce movement of the articles in the storage pocket by the second step portion and the third step portion.

The second storage portion may have a shape that is thinner in the front-back direction than in the up-down direction and the vehicle width direction. This configuration makes it possible to stably store a thin article such as a smartphone.

A bottom portion of the power supply portion may include a water drain hole. This configuration makes it possible to easily discharge water through the water drain hole when water has entered the power supply portion.

### BRIEF DESCRIPTION OF THE DRAWINGS

FIG. 1 is a side view of a straddled vehicle according to an embodiment;
FIG. 2 is a drawing illustrating the front portion of the straddled vehicle from behind;
FIG. 3 is a perspective view of the straddled vehicle;
FIG. 4 is a perspective view of the surroundings of a storage pocket;
FIG. 5 is a back view of the surroundings of the storage pocket;
FIG. 6 is a perspective view of the surroundings of the storage pocket;
FIG. 7 is a back view of the surroundings of the storage pocket;
FIG. 8 is a side view of the surroundings of the storage pocket;
FIG. 9 is a cross-sectional view taken along line IX-IX of FIG. 5;
FIG. 10 is a cross-sectional view taken along line X-X of FIG. 5;
FIG. 11 is a side view illustrating a state in which articles are stored in the storage pocket; and
FIG. 12 is a back view illustrating a state in which articles are stored in the storage pocket.

### DETAILED DESCRIPTION OF THE PREFERRED EMBODIMENTS

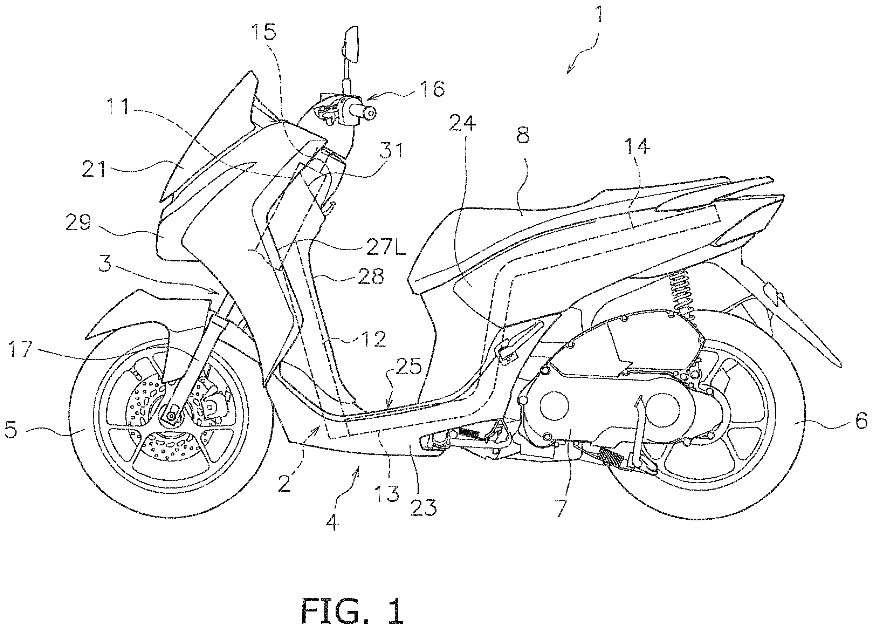

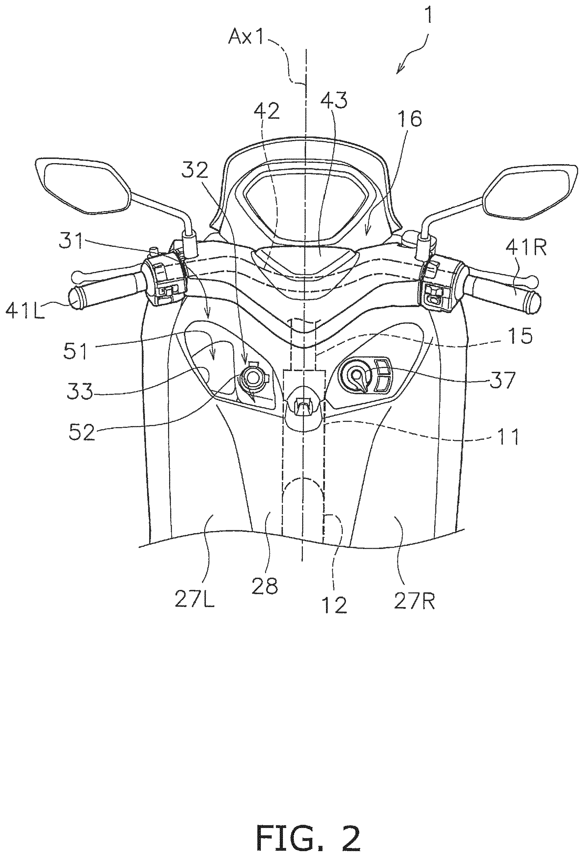

Hereinafter a straddled vehicle according to an embodiment will be described with reference to the attached drawings. FIG. 1 is a side view of a straddled vehicle 1 according to an embodiment. FIG. 2 is a drawing illustrating the front portion of the straddled vehicle 1 from behind. The straddled vehicle 1 includes a body frame 2, a steering device 3, a body cover 4, a front wheel 5, a rear wheel 6, a power unit 7, and a seat 8. The body frame 2 includes a head pipe 11, a down frame 12, a lower frame 13, and a rear frame 14.

The head pipe 11 is disposed at the vehicle center in a vehicle width direction. The down frame 12 extends downward from the head pipe 11. The lower frame 13 is connected to a lower portion of the down frame 12. The lower frame 13 extends rearward from the down frame 12. The rear frame 14 is connected to the lower frame 13. The rear frame 14 extends rearward and upward from the lower frame 13.

Note that, in this description, the term "extending in the front-back direction" is not limited to extending parallel to the front-back direction. "Extending in the front-back direction" means that the smaller angle of the angles formed with the horizontal direction is 45° or less. That is, "extending in the front-back direction" includes cases when extending in directions inclined with respect to the horizontal direction. This definition is also applicable to the up-down direction and the left-right direction.

Additionally, in this description, the term "connection" is not limited to direct connections and also encompasses indirect connections. Moreover, the term" connection" is not limited to fixing independent members to each other, but also encompasses a plurality of portions in a single member being continuous. The phase "inward in the vehicle width direction" means the direction, in the vehicle width direction, that approaches the center line Ax1 illustrated in FIG. 2. "Outward in the vehicle width direction" means the direction, in the vehicle width direction, away from the center line Ax1. The center line Ax1 is a center line that passes through the vehicle center in the vehicle width direction.

The steering device 3 is rotatably supported by the head pipe 11. The steering device 3 includes a steering shaft 15, a handle portion 16, and a suspension 17. The steering shaft 15 is disposed through the head pipe 11. The steering shaft 15 is rotatably supported by the head pipe 11. The handle portion 16 is connected to an upper portion of the steering shaft 15 and is rotated by operations of a driver. The suspension 17 is connected to a lower portion of the steering shaft 15. The front wheel 5 is rotatably supported by the steering device 3. The front wheel 5 is rotatably supported by the suspension 17.

As illustrated in FIG. 2, the handle portion 16 includes a left grip 41L, a right grip 41R, a handlebar 42, and a handle cover 43. The left grip 41L and the right grip 41R are respectively attached to the left and right ends of the handlebar 42. The handlebar 42 is connected to the steering shaft 15. The handle cover 43 covers the handlebar 42.

As illustrated in FIGS. 1 and 2, the body cover 4 includes a front cover 21, a left leg shield 27L, a right leg shield 27R, and a center back surface portion 28. The front cover 21 is disposed in front of the head pipe 11 and the down frame 12. A headlight 29 is provided in the front cover 21. The left and right leg shields 27L and 27R and the center back surface portion 28 are disposed behind the front cover 21.

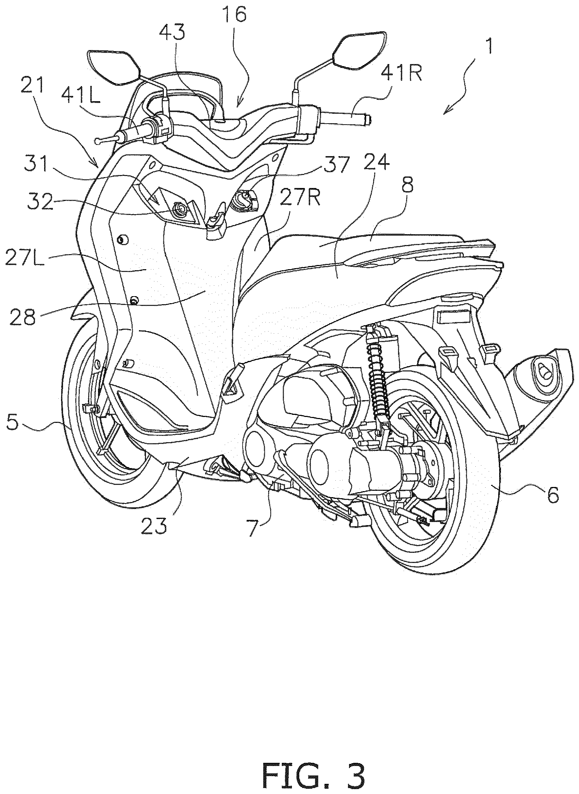

FIG. 3 is a perspective view of the straddled vehicle 1. As illustrated in FIGS. 2 and 3, the left leg shield 27L is disposed on the left side of the center back surface portion 28. The right leg shield 27R is disposed on the right side of the center back surface portion 28.

The center back surface portion 28 is disposed behind the head pipe 11 and the down frame 12. The center back surface portion 28 overlaps the head pipe 11 and the down frame 12 in a vehicle back view. The center back surface portion 28 has a shape that protrudes rearward from the left and right left leg shields 27L and 27R.

The body cover 4 includes a lower cover 23 and a rear cover 24. The rear cover 24 is disposed below the seat 8. The rear cover 24 is disposed on both sides of the rear frame 14. The lower cover 23 is disposed between the rear cover 22 and the front cover 21. The lower cover 23 is disposed above and on both sides of the lower frame 13.

The lower cover 23 includes a foot board 25 on which the feet of the rider are placed. The foot board 25 is disposed above the lower cover 23. The foot board 25 is disposed between the front cover 21 and the rear cover 24. The foot board 25 has a flat shape over the entire vehicle width direction. However, the foot board 25 may, for example, have fine irregularities to prevent slipping. The shape of the foot board 25 is not limited to a flat shape over the entire vehicle width direction, and the foot board 25 may include a center tunnel portion that protrudes upward.

The seat 8 is disposed behind the front cover 21. The power unit 7 includes a motor such as an engine. The power unit 7 is disposed below the seat 8. The rear wheel 6 is rotatably supported by the power unit 7.

As illustrated in FIGS. 2 and 3, the straddled vehicle 1 includes a storage pocket 31 and a power supply portion 32. As illustrated in FIG. 2, the storage pocket 31 is provided on at least one side in the vehicle width direction of the center line Ax1 of the vehicle width direction. In the present embodiment, the storage pocket 31 is disposed on the left side of the center line Ax1 in the vehicle width direction. The storage pocket 31 is disposed on the left side of the head pipe 11 in the vehicle width direction.

The power supply portion 32 is disposed on the same side in the left-right direction as the storage pocket 31 with respect to the center line Ax1. Accordingly, in the present embodiment, the power supply portion 32 is disposed on the left side of the center line Ax1. The power supply portion 32 is disposed on the left side of the head pipe 11 in the vehicle width direction. The storage pocket 31 and the power supply portion 32 are provided in the left leg shield 27L.

The straddled vehicle 1 includes a start switch 37 for starting the power unit 7. The start switch 37 is disposed on the opposite side in the left-right direction of the storage pocket 31 and the power supply portion 32 with respect to the center line Ax1. Accordingly, in the present embodiment, the start switch 37 is disposed on the right side of the center line Ax1. The start switch 37 is provided in the right leg shield 27R.

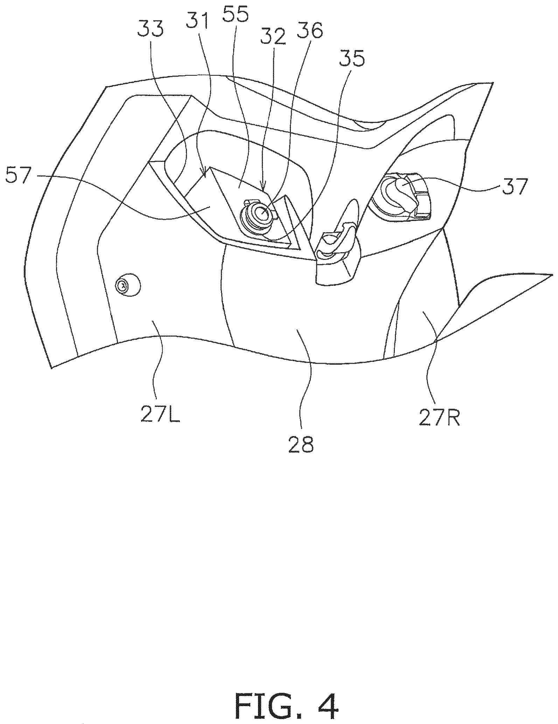

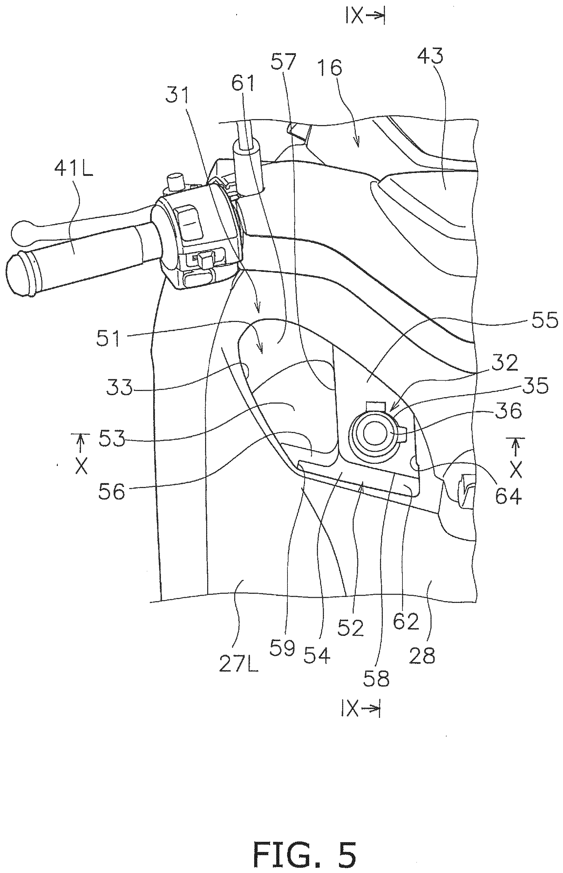

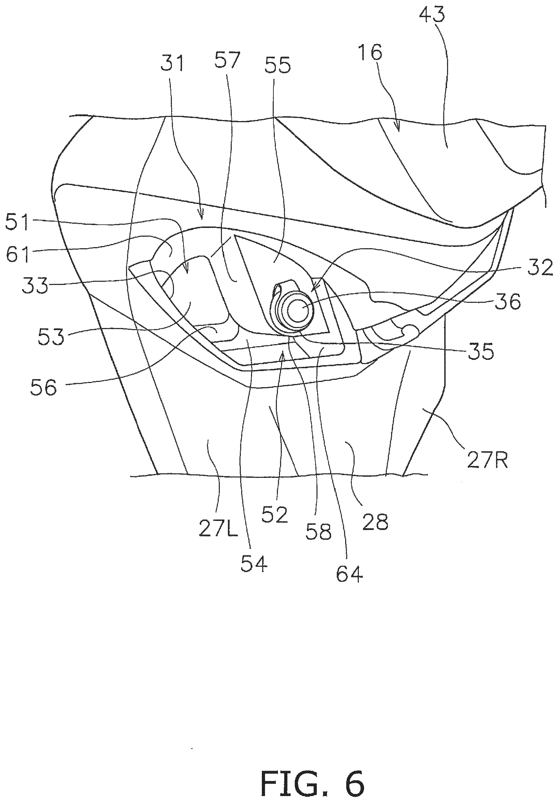

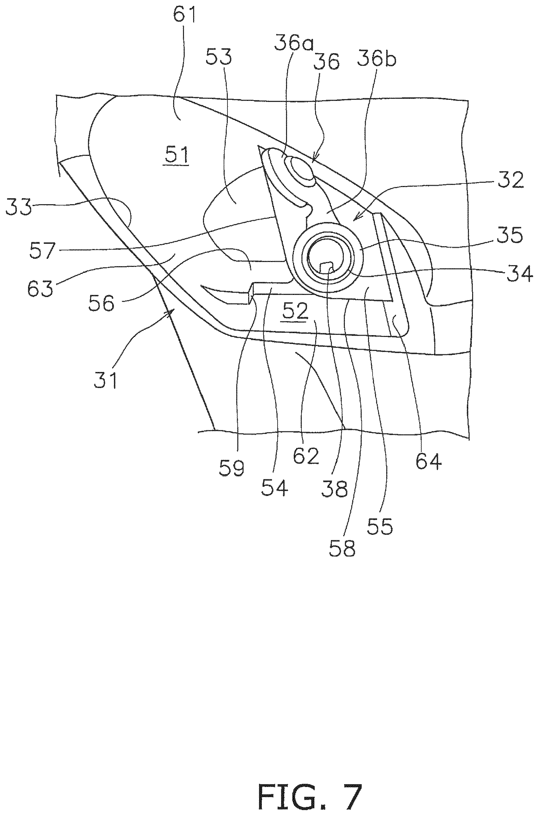

FIG. 4 is a perspective view of the surroundings of the storage pocket 31. FIG. 5 is a back view of the surroundings of the storage pocket 31. FIG. 6 is a perspective view of the surroundings of the storage pocket 31. FIG. 7 is a back view of the surroundings of the storage pocket 31. As illustrated in FIGS. 4 to 7, the storage pocket 31 includes a storage opening 33 through which articles to be stored are put in and taken out. The storage opening 33 opens upward. The storage pocket 31 does not have a lid member that closes the storage opening 33.

The power supply portion 32 includes a connector portion 35 and a lid member 36. In the present embodiment, the connector portion 35 is an accessory socket for supplying electric power. The accessory socket is a cylindrical power supply socket and, in one example, is a component stipulated by ISO4165 or JISD 5807-91. The connector portion 35 includes a power supply opening 34 that is open so as to enable a charging device such as a power cord to be attached and detached. The power supply opening 34 opens upward.

The lid member 36 is attached to the connector portion 35. Said lid member 36 extends parallel with the storage opening 33 when attached to connector portion 35, and is preferably positioned close to the storage opening 33. The lid member 36 opens and closes the power supply opening 34. In one example, the lid member 36 is made from an elastic material such as rubber. However, the lid member 36 may be made from materials other than elastic materials. As illustrated in FIG. 7, the lid member 36 includes a lid main body 36a and a coupling portion 36b. The lid main body 36a is detachably attached to the power supply opening 34. The lid main body 36a opens and closes the power supply opening 34.

The coupling portion 36b couples the lid main body 36a and the connector portion 35. FIG. 7 illustrates a state of the power supply portion 32 in which the lid member 36 is removed from the power supply opening 34. As illustrated in FIG. 7, the coupling portion 36b couples the lid main body 36a and the connector portion 35 while the lid main body 36a is removed from the power supply opening 34 and, as a result, the lid member 36 can be prevented from falling from the straddled vehicle 1. The connector portion 35 includes a water drain hole 38. The water drain hole 38 is provided in the bottom portion of the connector portion 35. The water drain hole 38 is in communication with the interior of the left leg shield 27L.

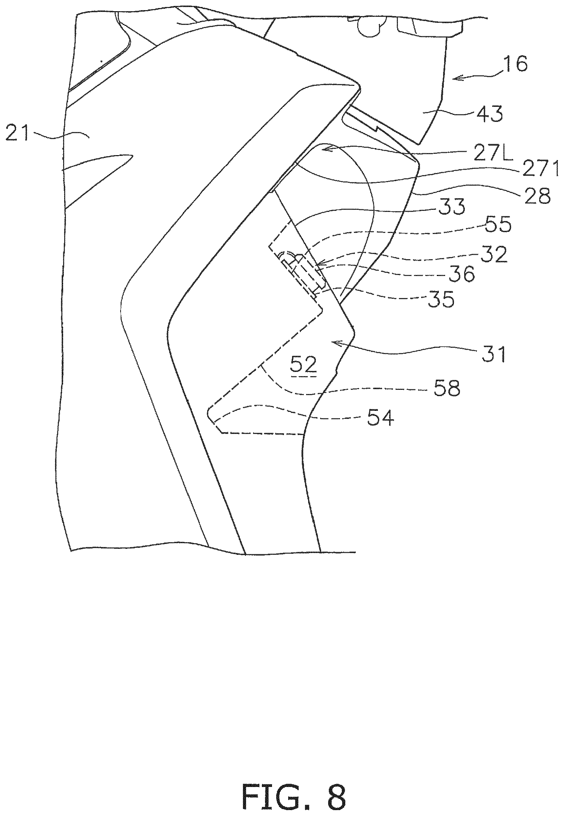

FIG. 8 is a side view illustrating the surroundings of the storage pocket 31. In a vehicle side view, the storage pocket 31 overlaps with the power supply portion 32. The power supply portion 32 is disposed in the storage pocket 31. The connector portion 35 is disposed in the storage pocket 31. The power supply opening 34 is disposed in the storage pocket 31. In the vehicle side view, the storage pocket 31 overlaps with the connector portion 35. In the vehicle side view, the storage pocket 31 overlaps with the lid member 36.

In the present embodiment, in the vehicle side view, the storage pocket 31 overlaps with the entire power supply portion 32. Specifically, in the vehicle side view, the entire power supply portion 32 is disposed in the storage opening 33 so that the power supply portion 32 does not protrude out from the storage opening 33. However, a configuration is possible in which, in the vehicle side view, a portion of the power supply portion 32 is disposed at a position that does not overlap with the storage pocket 31. Specifically, a portion of the power supply portion 32 may be disposed outside the storage pocket 31.

As illustrated in FIG. 8, the left leg shield 27L includes an inclined portion 271 that extends rearward and upward from the storage opening 33. The inclined portion 271 is disposed above the storage opening 33. The inclined portion 271 is disposed above the power supply opening 34. In a vehicle plan view, the inclined portion 271 may overlap with at least a portion of the storage opening 33. In the vehicle plan view, the inclined portion 271 may overlap with at least a portion of the power supply opening 34.

The handle portion 16 is disposed upward from the storage pocket 31 and the power supply portion 32. The handle cover 43 is disposed above the storage opening 33. The handle cover 43 is disposed above the power supply opening 34. In the vehicle plan view, the handle cover 43 may overlap with the storage opening 33. In the vehicle plan view, the handle cover 43 may overlap with the power supply opening 34.

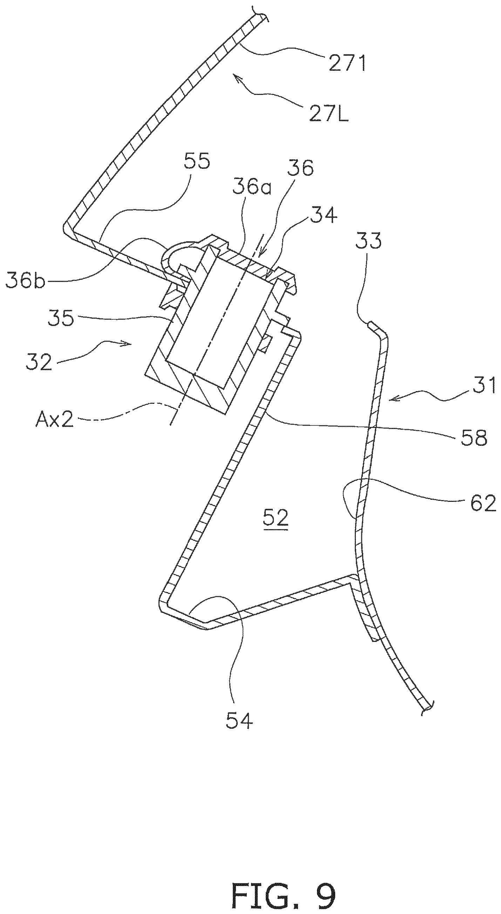

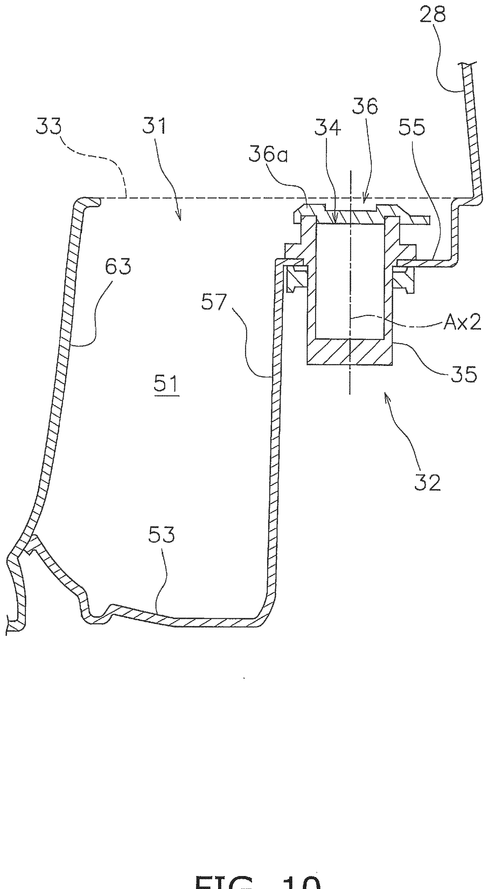

As illustrated in FIG. 8, the storage opening 33 opens rearward and upward. The angle of the opening direction of the storage opening 33 with respect to the horizontal direction is 45 degrees or greater. FIG. 9 is a cross-sectional view taken along line IX-IX of FIG. 5. FIG. 10 is a cross-sectional view taken along line X-X of FIG. 5. As illustrated in FIG. 9, an axis Ax2 of the power supply portion 32, which extends from the bottom portion of the power supply portion 32 toward the power supply opening 34, extends rearward and upward. Accordingly, the power supply opening 34 opens upward and rearward. The angle of the axis Ax2 of the power supply portion 32 with respect to the horizontal direction is 45 degrees or greater.

As illustrated in FIG. 5, the power supply portion 32 is disposed in the storage opening 33 at least when viewed from the axis Ax2 direction of the power supply portion 32. As illustrated in FIGS. 5 to 7, the storage pocket 31 includes a first storage portion 51 and a second storage portion 52. The power supply portion 32 is disposed inward in the vehicle width direction with respect to the first storage portion 51. The power supply portion 32 is disposed between the first storage portion 51 and the center line Ax1 in the vehicle width direction. When viewed from the axis Ax2 direction of the power supply portion 32, the power supply portion 32 is disposed at a position that does not overlap with the first storage portion 51. Specifically, when viewed from the axis Ax2 direction of the power supply portion 32, the power supply opening 34 is disposed at a position that does not overlap with the first storage portion 51.

The power supply portion 32 is disposed in front of the second storage portion 52. The second storage portion 52 is disposed behind the first storage portion 51 and the power supply portion 32. When viewed from the axis Ax2 direction of the power supply portion 32, the power supply portion 32 is disposed at a position that does not overlap with the second storage portion 52. Specifically, when viewed from the axis Ax2 direction of the power supply portion 32, the power supply opening 34 is disposed at a position that does not overlap with the second storage portion 52.

The first storage portion 51 is larger in the up-down direction than the second storage portion 52. The first storage portion 51 is larger in the vehicle front-back direction than the second storage portion 52. The first storage portion 51 has a shape that is larger in the up-down direction than in the vehicle front-back direction and the vehicle width direction. The first storage portion 51 is capable of storing cylindrical articles. For example, the first storage portion 51 is capable of storing a cylindrical beverage plastic bottle. In one example, the first storage portion 51 is capable of storing a 350 ml, 370 ml (12.5 oz.), 440 ml, 500 ml, 591 ml (20 oz.) cylindrical bottle or a cylindrical bottle of 600 ml or less.

The second storage portion 52 has a shape that is thinner in the front-back direction than in the up-down direction and the vehicle width direction. The second storage portion 52 has a shape that is larger in the up-down direction than in the vehicle width direction. In one example, the second storage portion 52 has a size capable of storing a thin mobile information terminal such as a smartphone. For example, the second storage portion 52 is capable of vertically storing a mobile information terminal. In other words, the second storage portion 52 is capable of vertically storing a mobile information terminal with the longitudinal direction of the mobile information terminal oriented in the up-down direction.

The first storage portion 51 includes a first bottom portion 53. The second storage portion 52 includes a second bottom portion 54. The first bottom portion 53 is disposed downward from the second bottom portion 54. The storage pocket 31 includes a third bottom portion 55. The third bottom portion 55 is disposed inward in the vehicle width direction with respect to the first storage portion 51. The third bottom portion 55 is disposed in front of the second storage portion 52. The third bottom portion 55 is disposed upward from the first bottom portion 53 and the second bottom portion 54.

As illustrated in FIG. 9, the third bottom portion 55 is inclined rearward and downward. The connector portion 35 is attached to the third bottom portion 55. The power supply opening 34 is disposed on the third bottom portion 55. The power supply opening 34 is positioned upward from the first bottom portion 53 and the second bottom portion 54.

The storage pocket 31 includes a first step portion 56, a second step portion 57, a third step portion 58, and a fourth step portion 59. The first step portion 56 is provided between the first bottom portion 53 and the second bottom portion 54. The first step portion 56 extends rearward and upward from the first bottom portion 53. The first step portion 56 extends in the vehicle width direction. The second step portion 57 is provided between the first bottom portion 53 and the third bottom portion 55. The second step portion 57 extends rearward and upward from the first bottom portion 53. The second step portion 57 extends in the vehicle front-back direction.

The third step portion 58 is provided between the second bottom portion 54 and the third bottom portion 55. The third step portion 58 extends rearward and upward from the second bottom portion 54. The third step portion 58 extends in the vehicle width direction. The fourth bottom portion 59 is disposed outward in the vehicle width direction with respect to the second bottom portion 54. The fourth step portion 59 extends rearward and upward from the second bottom portion 54. The fourth step portion 59 extends in the vehicle front-back direction.

The storage pocket 31 has an inner surface that includes a front surface 61, a rear surface 62, a first side surface 63, and a second side surface 64. In the present embodiment, the first side surface 63 is the left side surface and the second side surface 64 is the right side surface. As illustrated in FIG. 7, the first storage portion 51 is provided between the front surface 61 and the first step portion 56 and between the first side surface 63 and the second step portion 57. The second storage portion 52 is provided between the second side surface 64 and the fourth step portion 59 and between the third step portion 58 and the rear surface 62.

With the straddled vehicle 1 according to the present embodiment, the storage opening 33 does not have a lid and opens upward. As a result, the structures around the head pipe 11 are made compact, and long articles can be stored in the storage pocket 31. Moreover, the axis Ax2 of the power supply portion 32 extends upward. As a result, the power supply portion 32 can be used even when other articles are stored in the storage pocket 31.

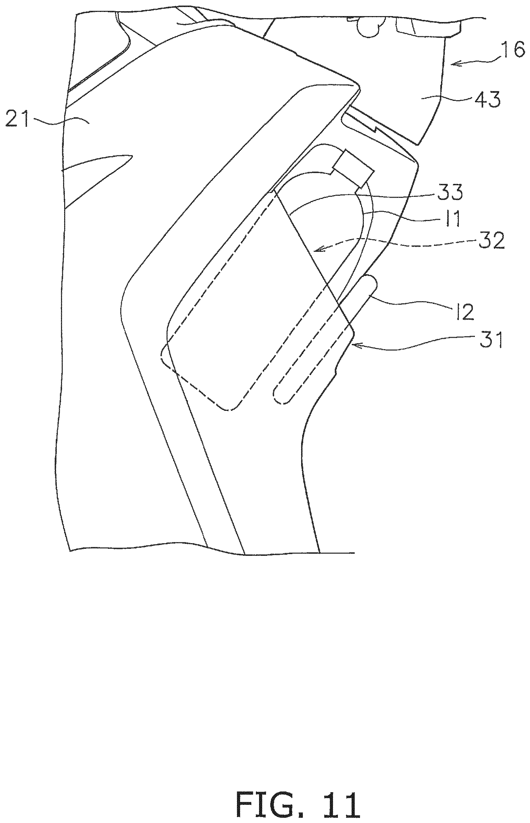

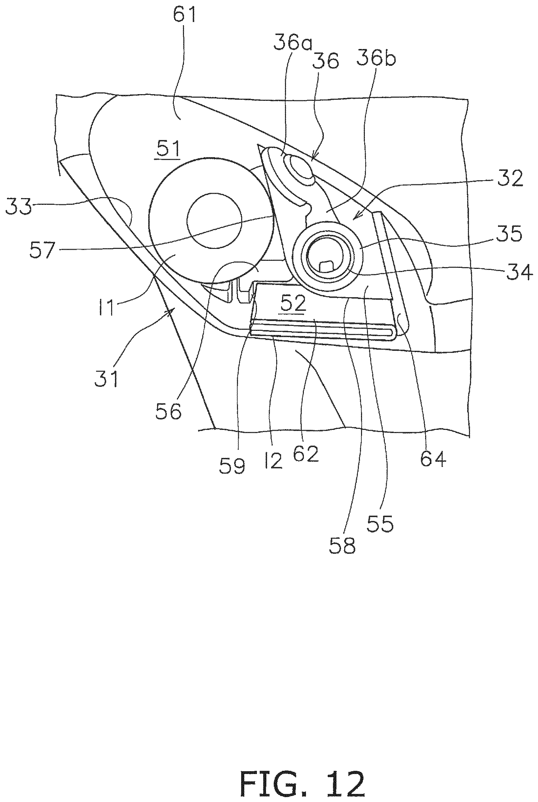

For example, FIG. 11 is a side view illustrating a state in which articles are stored in the storage pocket 31. FIG. 12 is a back view illustrating a state in which articles are stored in the storage pocket 31. As illustrated in FIGS. 11 and 12, a first article l1 is stored in the first storage portion 51. The first article l1 is a cylindrical bottle. A second article l2 is stored in the second storage portion 52. The second article l2 is a thin smartphone.

Since the storage opening 33 does not have a lid and opens upward, the first article l1 can be stored in the first storage portion 51 in a state where a portion of the first article l1 protrudes upward from the storage opening 33. Moreover, the second article l2 can be stored in the second storage portion 52 in a state where a portion of the second article l2 protrudes upward from the storage opening 33.

Additionally, since the axis Ax2 of the power supply portion 32 extends upward, the power supply portion 32 can easily be used even when the first article l1 is stored in the storage pocket 31. For example, the power supply portion 32 can easily be accessed from above in a state where the first article l1 is stored in the first storage portion 51 and the second article l2 is stored in the second storage portion 52. Accordingly, a charging device such as a power cord can easily be connected to the power supply portion 32.

The second article l2 and the power supply portion 32 can easily be connected by a power cord. As a result, the second article l2 can be charged using the power supply portion 32. The power supply opening 34 is positioned upward from the first bottom portion 53 and the second bottom portion 54. This configuration facilitates the attaching and detaching of the charging device to and from the power supply portion 32.

As illustrated in FIG. 12, movement of the first article l1 in the first storage portion 51 is restricted by the first step portion 56 and the second step portion 57. This configuration makes it possible for the first article l1 to be stably stored in the storage pocket 31. Movement of the second article l2 in the second storage portion 52 is restricted by the third step portion 58 and the fourth step portion 59. This configuration makes it possible for the second article l2 to be stably stored in the storage pocket 31.

The angle of the axis Ax2 of the power supply portion 32 with respect to the horizontal direction is 45 degrees or greater. This configuration further facilitates use of the power supply portion 32. The angle of the opening direction of the storage opening 33 with respect to the horizontal direction is 45 degrees or greater. This configuration makes it possible for a long article to be stably stored, even when a portion of the long article protrudes from the storage opening 33.

The power supply opening 34 is disposed in the storage pocket 31. The configuration makes it possible to prevent the entry of rain and the like into the power supply portion 32. Additionally, this configuration enables a mobile information terminal such as a smartphone to be charged while stored in the storage pocket 31. In the vehicle plan view, the inclined portion 271 of the left leg shield 27L overlaps with at least a portion of the storage opening 33. This configuration makes it possible to prevent the entry of rain and the like into the power supply portion 32 by the inclined portion 271.

The handle cover 43 is disposed above the storage opening 33. This configuration makes it possible to prevent the entry of rain and the like into the power supply portion 32 by the handle cover 43. The bottom portion of the power supply portion 32 includes the water drain hole 38. This configuration makes it possible to easily discharge water through the water drain hole 38 when water has entered the power supply portion 32.

The straddled vehicle 1 is not limited to a scooter-type vehicle and may be a different vehicle such as a moped. The shape of the body frame 2 may be changed. The number of front wheels 5 is not limited to 1 and may be 2 or more. The number of rear wheels 6 is not limited to 1 and may be 2 or more. The power unit 7 is not limited to an engine and may include an electric motor.

The shape and/or the disposal of the storage pocket 31 may be changed. The shape and/or the disposal of the power supply portion 32 may be changed. For example, the storage pocket 31 and the power supply portion 32 may be disposed on the right side of the center line Ax1. The storage pocket 31 and the power supply portion 32 may be provided in the right leg shield 27R. The shape, disposal, or size of the first storage portion 51 and the second storage portion 52 may be changed.

The connector portion 35 of the power supply portion 32 is not limited to an accessory socket and may be another type of connector such as a USB port. Alternatively, an adapter for converting the type of the connector may be attached to the connector portion 35.

In the embodiment described above, the power supply portion 32 is disposed in the storage pocket 31. However, the power supply portion 32 may be disposed outside the storage pocket 31. For example, the power supply portion 32 may be disposed upward from the storage pocket 31.

The shapes and/or the positions of the first to fourth step portions 46 to 59 may be changed. Alternatively, a portion or all of the first to fourth step portions 56 to 59 may be omitted. the right leg shield 27R. The shape, disposal, or size of the first storage portion 51 and the second storage portion 52 may be changed.

The connector portion 35 of the power supply portion 32 is not limited to an accessory socket and may be another type of connector such as a USB port. Alternatively, an adapter for converting the type of the connector may be attached to the connector portion 35.

The shapes and/or the positions of the first to fourth step portions 46 to 59 may be changed. Alternatively, a portion or all of the first to fourth step portions 56 to 59 may be omitted.

## Claims

1. A straddled vehicle, comprising:
a head pipe (11) disposed at a vehicle center in a vehicle width direction in a vehicle left-right direction;
a steering shaft (15) disposed through the head pipe (11);
a handle portion (16) connected to the steering shaft (15) and configured to rotate by an operation of a driver;
a front cover (21) disposed in front of the head pipe (11);
a leg shield (27L) disposed behind the front cover (21);
a lidless storage pocket (31) provided in the leg shield (27L), leftward or rightward of a center line (Ax1) that passes through the vehicle center in the vehicle width direction; and
a power supply portion (32) disposed in the leg shield (27L), on a same side in the vehicle left-right direction as the lidless storage pocket (31) with respect to the center line (Ax1),
wherein
the lidless storage pocket (31) includes a storage opening (33) that opens upward configured for putting in or taking out an article,
the handle portion (16) is disposed upward from the storage opening (33) and the power supply portion (32),
the power supply portion (32) is disposed within the storage pocket (31),
the power supply portion (32) includes a power supply opening (34) configured for attaching and detaching a charging device,
the lidless storage pocket (31) overlaps with the power supply portion (32) in a vehicle side view, and
in a vehicle front-back direction, an axis (Ax2) of the power supply portion (32), which extends from a bottom portion of the power supply portion (32) toward the power supply opening (34), extends rearward and upward,
**characterized in that**
the storage pocket (31) includes a first storage portion (51) and a second storage portion (52),
the power supply portion (32) is disposed inward in the vehicle width direction with respect to the first storage portion (51),
the power supply portion (32) is disposed between the first storage portion (51) and the center line (Ax1) in the vehicle width direction,
when viewed from the axis (Ax2) direction of the power supply portion (32), the power supply opening (34) is disposed at a position that does not overlap with the first storage portion (51),
when viewed from the axis (Ax2) direction of the power supply portion (32), the power supply opening (34) is disposed at a position that does not overlap with the second storage portion (52).

2. The straddled vehicle according to claim 1, wherein an angle of the axis (Ax2) of the power supply portion (32) with respect to the horizontal direction is 45 degrees or greater.

3. The straddled vehicle according to claim 1 or 2, wherein an angle of an opening direction of the storage opening (33) with respect to the horizontal direction is 45 degrees or greater.

4. The straddled vehicle according to any one of claims 1 to 3, wherein the power supply opening (34) is disposed in the lidless storage pocket (31).

5. The straddled vehicle according to any one of claims 1 to 4, wherein the leg shield (27L) includes an inclined portion (271) that extends rearward and upward from the storage opening (33), and
in a vehicle plan view, the inclined portion (271) overlaps with at least a portion of the storage opening (33).

6. The straddled vehicle according to any one of claims 1 to 5, wherein the handle portion (16) includes
a handlebar (42) connected to the steering shaft (15); and
a handle cover (43) covering the handlebar (42),
the handle cover (43) being positioned above the storage opening (33).

7. The straddled vehicle according to any one of claims 1 to 6, wherein the lidless storage pocket (31) includes
a first storage portion (51) including a first bottom portion (53); and
a second storage portion (52) including a second bottom portion (54) that is disposed at a different height than the first bottom portion (53) with regard to a vehicle up-down direction.

8. The straddled vehicle according to claim 7, wherein the lidless storage pocket (31) further includes a first step portion (56) provided between the first bottom portion (53) and the second bottom portion (54).

9. The straddled vehicle according to claim 7 or 8, wherein the power supply opening (34) is positioned upward from the first bottom portion (53) of the first storage portion (51).

10. The straddled vehicle according to any one of claims 7 to 9, wherein the power supply opening (34) is positioned upward from the second bottom portion (54) of the second storage portion (52).

11. The straddled vehicle according to any one of claims 7 to 10, wherein the lidless storage pocket (31) includes a third bottom portion (55) positioned upward from the first bottom portion (53) and the second bottom portion (54), and
the power supply opening (34) is disposed in the third bottom portion (55).

12. The straddled vehicle according to claim 11, wherein the lidless storage pocket (31) further includes
a second step portion (57) provided between the first bottom portion (53) and the third bottom portion (55); and
a third step portion (58) provided between the second bottom portion (54) and the third bottom portion (55).

13. The straddled vehicle according to any one of claims 7 to 12, wherein the second storage portion (52) has a shape that is thinner in the vehicle front-back direction than in the vehicle up-down direction and the vehicle width direction.

14. The straddled vehicle according to any one of claims 1 to 13, wherein a bottom portion of the power supply portion (32) includes a water drain hole (38).

15. The straddled vehicle according to any one of claims 1 to 14, wherein the power supply portion (32) includes a connector portion (35) and a lid member (36), said lid member (36) extends parallel with the storage opening (33) when attached to connector portion (35), and is preferably positioned close to the storage opening (33).

## Patentansprüche

1. Ein Spreiz-Sitz-Fahrzeug, bestehend aus
ein Kopf-Rohr (11), das in einer Fahrzeug-Mitte in einer Fahrzeug-Breiten-Richtung in einer Fahrzeug-Links-Rechts-Richtung positioniert ist;
eine Lenk-Welle (15), die durch das Kopf-Rohr (11) positioniert ist;
einen Lenkstangen-Abschnitt (16), der mit der Lenk-Welle (15) verbunden ist und konfiguriert ist, um sich durch eine Betätigung eines Fahrers zu drehen;
eine vordere Abdeckung (21), die vor dem Kopf-Rohr (11) positioniert ist;
ein Bein-Schild (27L), das hinter der vorderen Abdeckung (21) positioniert ist;
eine deckellose Aufbewahrungs-Tasche (31), die in dem Bein-Schild (27L) links oder rechts von einer Mittel-Linie (Ax1) vorgesehen ist, die durch die Fahrzeug-Mitte in der Fahrzeug-Breiten-Richtung verläuft; und
einen Strom-Versorgungs-Abschnitt (32), der in dem Bein-Schild (27L) auf der gleichen Seite in der Links-Rechts-Richtung des Fahrzeugs wie die deckellose Aufbewahrungs-Tasche (31) in Bezug auf die Mittel-Linie (Ax1) positioniert ist, wobei die deckellose Aufbewahrungs-Tasche (31) eine Aufbewahrungs-Öffnung (33) aufweist, die nach oben offen ist, die zum Einlegen oder Herausnehmen eines Artikels konfiguriert ist,
der Lenkstangen-Abschnitt (16) ist oberhalb von der Aufbewahrungs-Öffnung (33) und dem Strom-Versorgungs-Abschnitt (32) positioniert,
der Strom-Versorgungs-Abschnitt (32) ist innerhalb der Aufbewahrungs-Tasche (31) positioniert,
der Strom-Versorgungs-Abschnitt (32) beinhaltet eine Strom-Versorgungs-Öffnung (34), die zum Anbringen und Abnehmen einer Lade-Vorrichtung konfiguriert ist,
die deckellose Aufbewahrungs-Tasche (31) überlappt in einer Fahrzeug-Seitenansicht mit dem Strom-Versorgungs-Abschnitt (32), und
in einer Fahrzeug-Vorwärts-Rückwärts-Richtung, erstreckt sich eine Achse (Ax2) des Strom-Versorgungs-Abschnitts (32), die sich von einem Boden-Abschnitt des Strom-Versorgungs-Abschnitts (32) in Richtung der Strom-Versorgungs-Öffnung (34) erstreckt, nach hinten und nach oben,
**dadurch gekennzeichnet, dass**
die Aufbewahrungs-Tasche (31) einen ersten Aufbewahrungs-Abschnitt (51) und einen zweiten Aufbewahrungs-Abschnitt (52) beinhaltet,
der Strom-Versorgungs-Abschnitt (32) in Bezug auf den ersten Aufbewahrungs-Abschnitt (51) in Fahrzeug-Breiten-Richtung nach innen positioniert ist,
der Strom-Versorgungs-Abschnitt (32) zwischen dem ersten Aufbewahrungs-Abschnitt (51) und der Mittel-Linie (Ax1) in Fahrzeug-Breiten-Richtung positioniert ist, wenn von der Achsen-(Ax2)-Richtung des Strom-Versorgungs-Abschnitts (32) aus gesehen, ist die Strom-Versorgungs-Öffnung (34) an einer Position positioniert, die sich nicht mit dem ersten Aufbewahrungs-Abschnitt (51) überlappt,
wenn von der Achsen-(Ax2)-Richtung des Strom-Versorgungs-Abschnitts (32) aus gesehen, ist die Strom-Versorgungs-Öffnung (34) an einer Position positioniert, die sich nicht mit dem zweiten Aufbewahrungs-Abschnitt (52) überlappt.

2. Das Spreiz-Sitz-Fahrzeug gemäß Anspruch 1, wobei ein Winkel der Achse (Ax2) des Strom-Versorgungs-Abschnitts (32) in Bezug auf die horizontale Richtung 45 Grad oder mehr ist.

3. Das Spreiz-Sitz-Fahrzeug gemäß Anspruch 1 oder 2, wobei ein Winkel einer Öffnungs-Richtung der Aufbewahrungs-Öffnung (33) in Bezug auf die horizontale Richtung 45 Grad oder mehr ist.

4. Das Spreiz-Sitz-Fahrzeug gemäß einem der Ansprüche 1 bis 3, wobei die Strom-Versorgungs-Öffnung (34) in der deckellosen Aufbewahrungs-Tasche (31) positioniert ist.

5. Das Spreiz-Sitz-Fahrzeug gemäß einem der Ansprüche 1 bis 4, wobei das Bein-Schild (27L) einen geneigten Abschnitt (271) beinhaltet, der sich von der Aufbewahrungs-Öffnung (33) nach hinten und oben erstreckt, und
in einer Fahrzeug-Draufsicht überschneidet sich der geneigte Abschnitt (271) mit mindestens einem Abschnitt der Aufbewahrungs-Öffnung (33).

6. Das Spreiz-Sitz-Fahrzeug gemäß einem der Ansprüche 1 bis 5, wobei der Lenkstangen-Abschnitt (16) beinhaltet
eine Lenkstange (42), die mit der Lenk-Welle (15) verbunden ist; und
eine Lenkstangen-Abdeckung (43), welche die Lenkstange (42) abdeckt,
wobei die Lenkstangen-Abdeckung (43) über der Aufbewahrungs-Öffnung (33) positioniert ist.

7. Das Spreiz-Sitz-Fahrzeug gemäß einem der Ansprüche 1 bis 6, wobei die deckellose Aufbewahrungs-Tasche (31) beinhaltet
einen ersten Aufbewahrungs-Abschnitt (51), der einen ersten Boden-Abschnitt (53) beinhaltet; und
einen zweiten Aufbewahrungs-Abschnitt (52), der einen zweiten Boden-Abschnitt (54) beinhaltet, der in Bezug auf eine Fahrzeug-Aufwärts-Abwärts-Richtung auf einer anderen Höhe als der erste Boden-Abschnitt (53) positioniert ist.

8. Das Spreiz-Sitz-Fahrzeug gemäß Anspruch 7, wobei die deckellose Aufbewahrungs-Tasche (31) weiterhin einen ersten Stufen-Abschnitt (56) beinhaltet, der zwischen dem ersten Boden-Abschnitt (53) und dem zweiten Boden-Abschnitt (54) vorgesehen ist.

9. Das Spreiz-Sitz-Fahrzeug gemäß Anspruch 7 oder 8, wobei die Strom-Versorgungs-Öffnung (34) oberhalb des ersten Boden-Abschnitts (53) des ersten Aufbewahrungs-Abschnitts (51) positioniert ist.

10. Das Spreiz-Sitz-Fahrzeug gemäß einem der Ansprüche 7 bis 9, wobei die Strom-Versorgungs-Öffnung (34) oberhalb des zweiten Boden-Abschnitts (54) des zweiten Aufbewahrungs-Abschnitts (52) positioniert ist.

11. Das Spreiz-Sitz-Fahrzeug gemäß einem der Ansprüche 7 bis 10, wobei die deckellose Aufbewahrungs-Tasche (31) einen dritten Boden-Abschnitt (55) beinhaltet, der oberhalb des ersten Boden-Abschnitts (53) und des zweiten Boden-Abschnitts (54) positioniert ist, und
die Strom-Versorgungs-Öffnung (34) ist im dritten unteren Teil (55) positioniert.

12. Das Spreiz-Sitz-Fahrzeug gemäß Anspruch 11, wobei die deckellose Aufbewahrungs-Tasche (31) weiterhin beinhaltet
einen zweiten Stufen-Abschnitt (57), der zwischen dem ersten Boden-Abschnitt (53) und dem dritten Boden-Abschnitt (55) vorgesehen ist; und
einen dritten Stufen-Abschnitt (58), der zwischen dem zweiten Boden-Abschnitt (54) und dem dritten Boden-Abschnitt (55) vorgesehen ist.

13. Das Spreiz-Sitz-Fahrzeug gemäß einem der Ansprüche 7 bis 12, wobei der zweite Aufbewahrungs-Abschnitt (52) eine Form aufweist, die in der Fahrzeug-Vorwärts-Rückwärts-Richtung dünner ist als in der Fahrzeug-Aufwärts-Abwärts-Richtung und der Fahrzeug-Breiten-Richtung.

14. Das Spreiz-Sitz-Fahrzeug gemäß einem der Ansprüche 1 bis 13, wobei ein Boden-Abschnitt des Strom-Versorgungs-Abschnitts (32) ein Wasser-Ablauf-Loch (38) aufweist.

15. Das Spreiz-Sitz-Fahrzeug gemäß einem der Ansprüche 1 bis 14, wobei der Strom-Versorgungs-Abschnitt (32) einen Verbinder-Abschnitt (35) und ein Deckel-Element (36) beinhaltet, dieses Deckel-Element (36) erstreckt sich parallel zur Aufbewahrungs-Öffnung (33), wenn es am Verbinder-Abschnitt (35) angebracht ist, und ist vorzugsweise nahe der Aufbewahrungs-Öffnung (33) positioniert.

## Revendications

1. Véhicule à enfourcher comprenant :
un tube de tête de fourche (11) disposé sur un centre de véhicule dans une direction de largeur de véhicule dans une direction gauche-droite de véhicule ;
un arbre de de direction (15) disposée à travers le tube de tête de fourche (11) ;
une partie de poignée (16) connectée à l'arbre de direction (15) et configurée pour tourner via une opération d'un conducteur ;
un capot avant (21) disposé devant le tube de tête de fourche (11) ;
un protège-jambes (27L) disposé derrière le capot avant (21) ;
une poche de stockage sans couvercle (31) disposée dans le protège-jambes (27L), vers la gauche ou vers la droite d'une ligne centrale (Ax1) qui traverse le centre de véhicule dans la direction de largeur de véhicule ; et
une partie d'alimentation électrique (32) disposée dans le protège-jambes (27L), sur un même côté dans la direction gauche-droite de véhicule que la poche de stockage sans couvercle (31) par rapport à la ligne centrale (Ax1), dans lequel
la poche de stockage sans couvercle (31) inclut une ouverture de stockage (33) qui s'ouvre vers le haut configurée pour permettre de placer ou retirer un article,
la partie de poignée (16) est disposée vers le haut à partir de l'ouverture de stockage (33) et la partie d'alimentation électrique (32),
la partie d'alimentation électrique (32) est disposée au sein de la poche de stockage (31),
la partie d'alimentation électrique (32) inclut une ouverture d'alimentation (34) configurée pour permettre de rattacher et détacher un dispositif de chargement,
la poche de stockage sans couvercle (31) chevauche la partie d'alimentation électrique (32) dans une vue latérale de véhicule, et
dans une direction avant-arrière de véhicule, un axe (Ax2) de la partie d'alimentation électrique (32), qui s'étend à partir d'une partie de fond de la partie d'alimentation électrique (32) vers l'ouverture d'alimentation (34), s'étend vers l'arrière et vers le haut,
**caractérisé en ce que**
la poche de stockage (31) inclut une première partie de stockage (51) et une deuxième partie de stockage (52),
la partie d'alimentation électrique (32) est disposée vers l'intérieur dans la direction de largeur de véhicule par rapport à la première partie de stockage (51) ,
la partie d'alimentation électrique (32) est disposée entre la première partie de stockage (51) et la ligne centrale (Ax1) dans la direction de largeur de véhicule,
lorsque visualisée depuis la direction de l'axe (Ax2) de la partie d'alimentation électrique (32), l'ouverture d'alimentation (34) est disposée à un emplacement qui ne chevauche pas la première partie de stockage (51),
lorsque visualisée depuis la direction de l'axe (Ax2) de la partie d'alimentation électrique (32), l'ouverture d'alimentation (34) est disposée à un emplacement qui ne chevauche pas la deuxième partie de stockage (52).

2. Le véhicule à enfourcher selon la revendication 1, dans lequel un angle de l'axe (Ax2) de la partie d'alimentation électrique (32) par rapport à la direction horizontale est de 45 degrés ou plus.

3. Le véhicule à enfourcher selon la revendication 1 ou 2, dans lequel un angle d'une direction d'ouverture de l'ouverture de stockage (33) par rapport à la direction horizontale est de 45 degrés ou plus.

4. Le véhicule à enfourcher selon l'une quelconque des revendications 1 à 3, dans lequel l'ouverture d'alimentation (34) est disposée dans la poche de stockage sans couvercle (31).

5. Le véhicule à enfourcher selon l'une quelconque des revendications 1 à 4, dans lequel le protège-jambes (27L) inclut une partie inclinée (271) qui s'étend vers l'arrière et vers le haut à partir de l'ouverture de stockage (33), et
dans une vue en plan de véhicule, la partie inclinée (271) chevauche au moins une partie de l'ouverture de stockage (33).

6. Le véhicule à enfourcher selon l'une quelconque des revendications 1 à 5, dans lequel la partie de poignée (16) inclut
un guidon (42) connecté à l'arbre de direction (15) ; et
un capot de poignée (43) couvrant le guidon (42),
le guidon (43) étant positionné au-dessus de l'ouverture de stockage (33).

7. Le véhicule à enfourcher selon l'une quelconque des revendications 1 à 6, dans lequel la poche de stockage sans couvercle (31) inclut
une première partie de stockage (51) incluant une première partie de fond (53) ; et
une deuxième partie de stockage (52) incluant une deuxième partie de fond (54) qui est disposée à une hauteur différente de la première partie de fond (53) par rapport à une direction haut-bas de véhicule.

8. Le véhicule à enfourcher selon la revendication 7, dans lequel la poche de stockage sans couvercle (31) inclut en outre une première partie étagée (56) disposée entre la première partie de fond (53) et la deuxième partie de fond (54).

9. Le véhicule à enfourcher selon la revendication 7 ou 8, dans lequel l'ouverture d'alimentation (34) est positionnée vers le haut à partir de la première partie de fond (53) de la première partie de stockage (51).

10. Le véhicule à enfourcher selon l'une quelconque des revendications 7 à 9, dans lequel l'ouverture d'alimentation (34) est positionnée vers le haut à partir de la deuxième partie de fond (54) de la deuxième partie de stockage (52).

11. Le véhicule à enfourcher selon l'une quelconque des revendications 7 à 10, dans lequel la poche de stockage sans couvercle (31) inclut une troisième partie de fond (55) positionnée vers le haut à partir de la première partie de fond (53) et la deuxième partie de fond (54), et
l'ouverture d'alimentation (34) est disposée dans la troisième partie de fond (55).

12. Le véhicule à enfourcher selon la revendication 11, dans lequel la poche de stockage sans couvercle (31) inclut en outre
une deuxième partie étagée (57) disposée entre la première partie de fond (53) et la troisième partie de fond (55) ; et
une troisième partie étagée (58) disposée entre la deuxième partie de fond (54) et la troisième partie de fond (55).

13. Le véhicule à enfourcher selon l'une quelconque des revendications 7 à 12, dans lequel la deuxième partie de stockage (52) présente une forme qui est plus fine dans la direction avant-arrière de véhicule que dans la direction haut-bas de véhicule et la direction de largeur de véhicule.

14. Le véhicule à enfourcher selon l'une quelconque des revendications 1 à 13, dans lequel une partie de fond de la partie d'alimentation électrique (32) inclut un trou d'évacuation d'eau (38).

15. Le véhicule à enfourcher selon l'une quelconque des revendications 1 à 14, dans lequel la partie d'alimentation électrique (32) inclut une partie de connecteur (35) et un élément de couvercle (36), ledit élément de couvercle (36) s'étend parallèle à l'ouverture de stockage (33) lorsque rattaché à la partie de connecteur (35), et est de préférence positionné à proximité de l'ouverture de stockage (33).
